Europäisches Patentamt

European Patent Office

Office européen des brevets

(19)

(11) Veröffentlichungsnummer : **0 333 796 B1**

(12) **EUROPÄISCHE PATENTSCHRIFT**

(45) Veröffentlichungstag der Patentschrift :
15.07.92 Patentblatt 92/29

(51) Int. Cl.⁵ : **C22B 7/00**, C02F 9/00

(21) Anmeldenummer : 88907682.4

(22) Anmeldetag : 02.09.88

(86) Internationale Anmeldenummer :
PCT/EP88/00799

(87) Internationale Veröffentlichungsnummer :
WO 89/02481 23.03.89 Gazette 89/07

(54) VERFAHREN UND VORRICHTUNG ZUR AUFARBEITUNG VON HYDROXIDSCHLÄMMEN.

(30) Priorität : 07.09.87 DE 3729913

(43) Veröffentlichungstag der Anmeldung :
27.09.89 Patentblatt 89/39

(45) Bekanntmachung des Hinweises auf die
Patenterteilung :
15.07.92 Patentblatt 92/29

(84) Benannte Vertragsstaaten :
AT BE CH DE FR GB IT LI LU NL SE

(56) Entgegenhaltungen :
DE-A- 2 023 410
DE-A- 3 308 179
FR-A- 2 436 821
US-A- 3 816 306
US-A- 4 105 743
US-A- 4 162 294
US-A- 4 318 788
US-A- 4 465 593
US-A- 4 579 721
US-A- 4 680 126

(56) Entgegenhaltungen :
Chemical Abstracts, vol. 94, 1981, Columbus,
Ohio, US), see page 244, abstract 87847u
Chemical Abstracts, vol. 94, 1981, (Columbus,
Ohio, US), M. Tels et al.: "Recovery of pure
metal salts from mixed metalhydroxide sludges", see page222, abstract 50795z
Chemical Abstracts, vol. 92, 1980, Columbus,
Ohio, US), see page 239, abstract 132677k
Chemical Abstracts, Band 105, 1986, (Columbus, Ohio), siehe Seite 255, Zusammenfassung 82955p

(73) Patentinhaber : GUT GESELLSCHAFT FÜR
UMWELTSCHONENDE TECHNIK MBH
Unterer Markt 6
W-4530 Ibbenbüren 1 (DE)

(72) Erfinder : REUTER, Rolf
Am Stadtbad 9
W-4300 Essen 18 (DE)

(74) Vertreter : Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg (DE)

EP 0 333 796 B1

## Beschreibung

## Technisches Gebiet

Die vorliegende Erfindung betrifft ein Verfahren und eine Vorrichtung zur Aufarbeitung von Hydroxidschlämmen. Solche Hydroxidschlämme fallen vor allem bei Galvanikprozessen an und stellen durch ihre relativ hohen Anteile an Schwermetallen wie Chrom, Eisen, Kupfer, Nickel und gegebenenfalls Zink ein erhebliches Umweltproblem dar.

## Offenbarung der Erfindung

Die Aufgabe der vorliegenden Erfindung besteht dementsprechend darin, ein Verfahren und eine Vorrichtung anzugeben, die es gestatten, solche Hydroxidschlämme insbesondere Hydroxidschlämme, die Chrom, Eisen, Kupfer, Nickel und gegebenenfalls Zink enthalten, so aufzuarbeiten, daß durch diese Hydroxidschlämme keine oder vernachlässigbare Umweltbelastungen entstehen.

Nach dem erfindungsgemäßen Verfahren wird diese Aufgabe dadurch gelöst, daß bei Vorhandensein von Zink das Zinkhydroxid durch Alkali aus dem Schlamm gelöst wird, daß danach das Chromhydroxid in dem Rückstand der Alkalibehandlung in einem schwach alkalischen Medium zu Chromat oxidiert wird, daß aus dem Rückstand von der Oxidation bzw. Alkalibehandlung Kupfer und Nickel durch Säurebehandlung gelöst werden, daß der im wesentlichen aus Eisenhydroxid bestehende Restschlamm von der Kupfer und Nickel enthaltenden Lösung abgetrennt wird, daß aus der Kupfer und Nickel enthaltenden Lösung Kupferoxid ausgefällt wird und daß das ausgefällte Kupferoxid von der Nickel enthaltenden Lösung getrennt wird.

Die erfindungsgemäße Vorrichtung zur Lösung der Aufgabe ist gekennzeichnet durch einen mit einer Befülleinrichtung versehenen Reaktionsbehälter, der über ein Filter an einen Vorlagebehälter angeschlossen ist, eine mit dem Reaktionsbehälter verbundene Reagensdosiervorrichtung, eine Umlaufanlage mit einer Umlaufleitung, die eine Umlaufpumpe enthält und den Vorlagebehälter mit dem Reaktionsbehälter verbindet, eine Austragvorrichtung, die das Filter mit einem Sammelbehälter für im wesntlichen Eisenhydroxid enthaltenden Restschlamm, und Sammelbehälter jeweils für Zinkatlösung, Chromatlösung, Nickellösung und Kupferlösung, die jeweils eingangsseitig über gesteuerte Ventile mit dem Vorlagebehälter und ausgangsseitig über gesteuerte Ventile wahlweise an die Umlaufanlage oder eine Weiterverarbeitungsanlage anschließbar sind.

Das erfindungsgemäße Verfahren und die erfindungsgemäße Vorrichtung gestatten somit eine vollständige Aufarbeitung des Hydroxidschlammes unter Auftrennung in seine Einzelbestandteile. Die Aufarbeitung geschieht unter Anwendung von Verfahrensmaßnahmen, die selbst keine nennenswerte Umweltbelastung hervorrufen. Es wird auf diese Weise erreicht, daß die Notwendigkeit zu einer Deponierung des Hydroxidschlammes entfällt. Ein besonderer Vorteil wird dadurch erzielt, daß die Aufarbeitung in einem Eintopfverfahren durchgeführt wird und die Lösungen der aufgetrennten Bestandteile im Kreislauf geführt werden. Dies hat zur Folge, daß die Lösungen der Einzelbestandteile in einem solchen Maße angereichert werden können, daß sich die Weiterverarbeitung unter Rückgewinnung der Wertstoff lohnt.

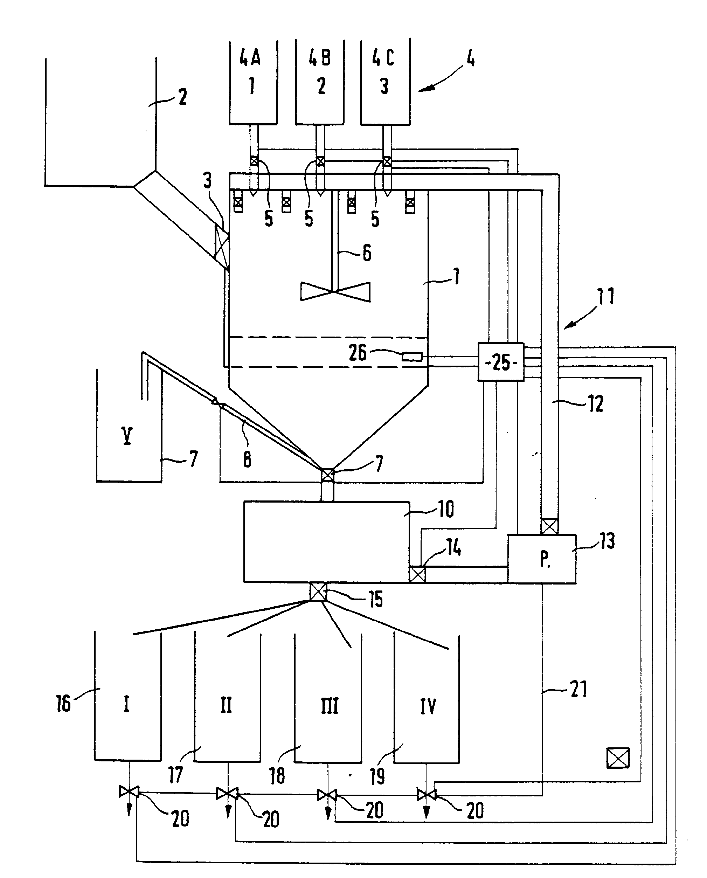

Ein Ausführungsbeispiel der erfindungsgemäßen Vorrichtung zur Ausübung des erfindungsgemäßen Verfahrens ist in der Abbildung schematisch dargestellt und wird nachfolgend im einzelnen erläutert und beschrieben.

## Kurze Beschreibung der Zeichnung

Die Zeichnung stellt schematisch eine Vorrichtung zur Aufarbeitung von Hydroxidschlämmen dar.

## Bevorzugte Ausführung der Erfindung

Die nachfolgend beschriebene Vorrichtung stellt ein bevorzugtes Ausführungsbeispiel dar, das zur chargenweisen Aufarbeitung von Hydroxidschlamm, speziell von Hydroxidschlamm der Art, wie er in Galvanikprozessen anfällt, geeignet ist. Das Aufarbeitungsverfahren kann jedoch auch mit gleicher Wirksamkeit in einer Reihe hintereinandergeschalteter Reaktionsbehälter vorgenommen werden, in denen die einzelnen Aufarbeitungsstufen getrennt ausgeführt werden.

Die Vorrichtung enthält als zentralen Bestandteil der Anlage einen Reaktionsbehälter 1, der mit einer Befülleinrichtung 2 versehen ist, die über ein gesteuertes Ventil 3 an die Eingangsseite des Reaktionsbehälters 1 angeschlossen ist. Der Reaktionsbehälter 1 ist an der Eingangsseite weiterhin mit einer Reagensdosiervorrichtung 4 versehen, deren Vorratsbehälter 4A,4B und 4C jeweils über gesteuerte Ventile 5 an den Reaktionsbehälter 1 angeschlossen sind. in das Innere des Reaktionsbehälters 1 erstreckt sich der Rührer 6 eines konventionellen Rührwerks.

An der Ausgangsseite des Reaktionsbehälters 1 befindet sich ein Filter 7, das mit einem Vorlagebehälter 10 verbunden ist. Mit dem Filter 7 ist eine Austragvorrichtung 8 üblicher Bauart verbunden, mittels derer der Filterrückstand vom Filter 7 in einen Sammelbehälter 9 gefördert wird. Der Vorlagebehälter 10 ist über gesteuertes Ventil 14 und eine Umlaufanlage 11 aus einer Umlaufleitung 12 und einer Umlaufpumpe 13 an die Eingangsseite des Reaktionsbehälters 1 angeschlossen.

Der Vorlagebehälter 10 ist weiterhin über ein gesteuertes Ventil 15 an Sammelbehälter 16, 17, 18 und 19 angeschlossen, die jeweils die Lösungen der getrennten Bestandteile des Hydoxidschlamms aufnehmen. Die Sammelbehälter 16 bis 19 sind ausgangsseitig über gesteuerte Ventile 20 wahlweise mit nicht im einzelnen dargestellten Weiterverarbeitungsanlagen, zum Beispiel Elektrolyseanlagen, oder eine Zuleitung 21 an die Eingangsseite der Umlaufpumpe 13 der Umlaufanlage 11 anschließbar.

Zur Steuerung des Aufarbeitungsverfahrens ist eine konventionelle programmierbare Steuervorrichtung 25 vorgesehen, an welche die gesteuerten Ventile 3,5, 14,15 und 20, sowie die Umlaufpumpe 13, die Austragvorrichtung 8 und ein im Inneren des Reaktionsbehälters 1 angeordneter pH-Sensor 26 angeschlossen sind und welche das nachstehend beschriebene Verfahren nach einem vorgegebenen Programmablauf steuert.

Im einzelnen wird die vorstehend beschriebene Anlage zur Aufarbeitung eines Chrom, Eisen, Kupfer, Nickel und gegebenenfalls Zink enthaltenden Hydroxidschlamms wie folgt betrieben. Dabei können die Reaktionsschritte zur Abtrennung von Zink entfallen, wenn der Hydroxidschlamm kein Zinkhydroxid enthält. In der nachfolgenden Beschreibung wird davon ausgegangen, daß die Sammelbehälter 16 bis 19 Zinkatlösung, Chromatlösung bzw. Nickellösung bzw. Kupferlösung enthalten. Der erste Vorratsbehälter 4A enthält wäßriges Alkali, z. B. Natronlauge, der zweite Vorratsbehälter 4 B eine wäßrige Wasserstoffperoxidlösung, und der dritte Vorratsbehälter 4C eine wäßrige Säure, z.B. Salzsäure. Soweit erforderlich, kann zwischen den einzelnen Trennungsschritten vorgesehen werden, daß die jeweiligen Rückstände mit Wasser gewaschen werden.

Im ersten Verfahrensschritt wird der Reaktionsbehälter 1 durch Öffnen des gesteuerten Ventils 3 mit einer vorgegebenen Menge des Hydroxidschlamms aus der Befülleinrichtung 2 beschickt. Anschließend wird das Zink gelöst indem durch Betätigung der Umlaufpumpe 13 und Öffnung des zugehörigen gesteuerten Ventil 20 die Zinkatlösung aus dem Sammelbehälter 17 umgepumpt wird. Aus dem ersten Vorratsbehälter 4A der Reagensdosiervorrichtung 4 kann gegebenenfalls wäßriges Alkali zugegeben werden, um den pH-Wert der Aufschlämmung auf einen Wert im Bereich von 12 einzustellen. Anschließend wird die Umlaufanlage 11 betrieben und die alkalische Lösung über eine vorgegebene Zeitdauer umgewälzt bis alles Zinkhydroxid aus dem Hydroxidschlamm in Lösung gegangen ist. Die alkalische Lösung wird dann durch das Filter und den Vorlagebehälter 10 in den Sammelbehälter 17 zurückgeführt.

Nach einer vorgegebenen Reaktionszeit wird der Umlauf beendet. Die das Chromat enthaltende Lösung wird durch das Filter 7 in den Vorlagebehälter 10 filtriert und das Filtrat aus dem Vorlagebehälter 10 in den Sammelbehälter 16 übergeführt.

Der Rückstand von der Alkalibehandlung im Reaktionsbehälter 1 wird anschließend oxidiert, indem Chromatlösung aus dem Sammelbehälter 16 entnommen und in den Reaktionsbehälter 1 eingebracht wird. Je nach Anforderung wird dann Säure oder Lauge zugegeben, wodurch ein pH-Wert im Bereich von 8 bis 11 in dem Reaktionsbehälter 1 eingestellt wird. Nach Einstellung des gewünschten pH-Wertes im Bereich von 8 wird aus dem zweiten Vorratsbehälter 4B eine ausreichende Menge Wasserstoffperoxid zudosiert. Die Aufschlämmung wird dann gerührt und gleichzeitig wird die Umlaufanlage 11 in Betrieb genommen.

Der im Reaktionsbehälter verbliebene Schlamm wird dann in saurer Nickellösung aus dem Sammelbehälter 18 aufgeschlämmt, wobei der pH-Wert durch Zugabe von Säure aus dem dritten Vorratsbehälter 4C auf einen Wert im Bereich von 3,5 eingestellt wird. Unter diesen Bedingungen gehen Kupfer und Nickel in Lösung, während ein Restschlamm, der im wesentlichen Eisenhydroxid enthält, verbleibt. Die erhaltene Lösung von Kupfer und Nickel wird durch das Filter 7 in den Vorlagebehälter 10 filtriert. Der auf dem Filter 7 zurückbleibende Restschlamm wird mittels der Austragvorrichtung 8 ausgetragen und in dem Sammelbehälter 9 gesammelt. Aus diesem Sammelbehälter 9 kann der Restschlamm entnommen werden und zum Beispiel zu Eisenoxid weiterverarbeitet werden.

Die Lösung wird anschließend aus dem Vorlagebehälter 10 in den Reaktionsbehälter 1 zurückgeführt und durch Zusatz wäßriger Lauge aus dem ersten Vorratsbehälter 4A auf einen pH-Wert im Bereich von 4 bis 6 eingestellt. Anschließend wird aus dem ersten Vorratsbehälter 4A Wasserstoffperoxid zugegeben, wodurch das in der Lösung enthaltene Kupfer als Kupferoxid ausgefällt wird. Nach einer vorgegebenen Zeitdauer wird das Kupferoxid über das Filter 7 abfiltriert und die Nickel enthaltende Lösung in den Sammelbehälter 18 übergeführt.

Der auf dem Filter 7 verbliebene Rückstand aus Kupferoxid wird in der sauren Kupferlösung gelöst, die aus dem Sammelbehälter 19 entnommen wird und gegebenenfalls mit Säure aus dem dritten Vorratsbehälter 4C auf den gewünschten Säuregrad eingestellt wird. Die Kupfer enthaltende Lösung wird anschließend in den Sammelbehälter 19 zurückgeführt.

Nach Ablauf der vorstehend beschriebenen Verfahrenschritte kann eine weitere Charge des Hydroxidschlamms aus der Befülleinrichtung 2 in den Reaktionsbehälter 1 eingegeben werden. Diese weitere Charge wird dann in gleicher Weise in ihre Bestandteile aufgetrennt.

Nach einer gewissen Zahl von Umläufen der in den Sammelbehältern 16 bis 19 enthaltenen Lösungen ist die Metallkonzentration in diesen Lösungen auf Werte angereichert, die eine Aufarbeitung dieser Lösungen auf die darin enthaltenen Wertstoffe ermöglicht und wirtschaftlich sinnvoll macht. Dazu können gängige und dem Fachmann geläufige Verfahren, zum Beispiel elektrolytische Verfahren Anwendung finden.

**Patentansprüche**

1. Verfahren zur Aufarbeitung von Hydroxidschlämmen, die im wesentlichen Hydroxide von Chrom, Eisen, Kupfer, Nickel und gegebenenfalls Zink enthalten, dadurch gekennzeichnet, daß bei Vorhandensein von Zink das Zinkhydroxid durch Alkali aus dem Schlamm gelöst wird, daß danach das Chromhydroxid in dem Rückstand der Alkalibehandlung in einem schwach alkalischen Medium zu Chromat oxidiert wird, daß aus dem Rückstand von der Oxidation bzw. Alkalibehandlung Kupfer und Nickel durch Säurebehandlung gelöst werden, daß der im wesentlichen aus Eisenhydroxid bestehende Restschlamm von der Kupfer und Nickel enthaltenden Lösung abgetrennt wird, daß aus der Kupfer und Nickel enthaltenden Lösung Kupferoxid ausgefällt wird und daß das ausgefällte Kupferoxid von der Nickel enthaltenden Lösung getrennt wird.

2. Verfahren nach Anspruch 1, dadurch gekennzeichnet, daß das Zinkhydroxid aus dem Oxidationsrückstand bei einem pH-Wert im Bereich von 12 herausgelöst wird.

3. Verfahren nach Anspruch 1 oder 2, dadurch gekennzeichnet, daß das Chromhydroxid bei einem pH-Wert im Bereich von 8 mit Wasserstoffperoxid wird.

4. Verfahren nach einem der Ansprüche 1 bis 3, dadurch gekennzeichnet, daß Kupfer und Nickel aus dem Oxidationsrückstand bzw. dem Rückstand von der Alkalibehandlung bei einem pH-Wert im Bereich von 3,5 herausgelöst werden.

5. Verfahren nach einem der Ansprüche 1 bis 4, dadurch gekennzeichnet, daß das Kupferoxid aus der Kupfer und Nickel enthaltenden Lösung bei einem pH-Wert im Bereich von 5 durch Zusatz von Wasserstoffperoxid ausgefällt wird.

6. Verfahren nach einem der vorstehenden Ansprüche, dadurch gekennzeichnet, daß die Chromat, Zinkat, Kupfer und Nickel enthaltenden Lösungen jeweils in einem eigenen Sammelgefäß aufgefangen werden und diese Lösungen zur Herauslösung des betreffenden Metalls aus dem Hydroxidschlamm im Kreislauf geführt werden.

7. Verfahren nach Anspruch 6, dadurch gekennzeichnet, daß jede Lösung unter Zwischenschaltung eines Filters und bis zur Erreichung einer vorgegebenen Anreicherungskonzentration im Kreislauf geführt wird.

8. Verfahren nach einem der Ansprüche 1 bis 7, dadurch gekennzeichnet, daß der Hydroxidschlamm chargenweise in einem Reaktionsbehälter im Eintopfverfahren umgesetzt wird.

9. Verfahren nach Anspruch 8, dadurch gekennzeichnet, daß die Kupfer und Nickel enthaltende Lösung nach Austragen des im wesentlichen Eisenhydroxid enthaltenden Restschlammes in den Reaktionsbehälter zurückgeführt wird.

10. Verfahren nach Anspruch 9, dadurch gekennzeichnet, daß das ausgefällte Kupferoxid durch wäßrige Säure gelöst wird und die wäßrige saure Lösung aus dem Reaktionsbehälter in den Sammelbehälter für die Kupfer enthaltende Lösung geleitet wird.

11. Verfahren nach Anspruch 9, dadurch gekennzeichnet, daß der im wesentlichen aus Eisenhydroxid bestehende Restschlamm zu Eisenoxid weiterverarbeitet wird.

12. Verfahren nach Anspruch 7, dadurch gekennzeichnet, daß aus den Kupfer, Nickel und gegebenenfalls Zink enthaltenden Lösungen nach Erreichen der vorgegebenen Anreicherungskonzentration die jeweiligen Metalle elektrolytisch zurückgewonnen werden.

13. Vorrichtung zur Durchführung des Verfahrens nach einem der vorstehenden Ansprüche, gekennzeichnet durch ein mit einer Befülleinrichtung (2) versehenen Reaktionsbehälter (1), der über ein Filter(7) an einen Vorlagebehälter (10) angeschlossen ist, eine mit dem Reaktionsbehälter (1) verbundene Reagensdosiervorrichtung (4), eine Umlaufanlage (11) mit einer Umlaufleitung (12), die eine Umlaufpumpe (13) enthält und den Vorlagebehälter (10) mit dem Reaktionsbehälter (1) verbindet, eine Austragvorrichtung (8), die das Filter (7) mit einem Sammelbehälter (9) für im wesentlichen Eisenhydroxid enthaltenden Restschlamm verbindet, und Sammelbehälter (16,17,18,19) jeweils für Zinkatlösung, Chromatlösung, Nickellösung und Kupferlösung, die jeweils eingangsseitig über mindestens ein gesteuertes Ventil (15) mit dem Vorlagebehälter (10) und ausgangsseitig über gesteuerte Ventile (20) wahlweise an die Umlaufanlage (11) oder eine Weiterverarbeitungsanlage anschließbar sind.

14. Vorrichtung nach Anspruch 13, dadurch gekennzeichnet, daß die Reagensdosiervorrichtung (4) einen ersten Vorratsbehälter (4A) für eine wäßrige Wasserstoffperoxidlösung, einen zweiten Vorratsbehälter (4B) für eine wäßrige Alkalilauge, und einen dritten Vorratsbehälter (4C) für wäßrige Säure aufweist und daß jeder Vorratsbehälter (4A,4B,4C) über ein gesteuertes Dosierventil (5) an den Reaktionsbehälter (1) angeschlossen ist.

15. Vorrichtung nach Anspruch 13 oder 14, dadurch gekennzeichnet, daß eine programmierbare Steuervorrichtung (25) vorgesehen ist und daß der Reaktionsbehälter (1) einen mit der programmierbaren Steuervorrichtung (25) verbundene pH-Sensor (26) enthält.

16. Vorrichtung nach einem der Ansprüche 13 bis 15, dadurch gekennzeichnet, daß die Weiterverarbeitungsanlage für die Weiterverarbeitung der Kupfer, Nickel und gegebenenfalls Zink enthaltenden Lösungen eine Anlage zur elektrolytischen Abscheidung der jeweiligen Metalle ist.

## Claims

1. Method of processing hydroxide sludges which substantially contain hydroxides of chromium, iron, copper, nickel and possibly zinc, characterised in that, in the presence of zinc, the zinc hydroxide is dissolved from the sludge by alkali, that subsequently the chromium hydroxide in the residue of the alkali treatment is oxidized to chromate in slightly alkaline medium, that copper and nickel are dis solved from the residue of the oxidation or the alkali treatment, respectively, by acid treatment, that the residual sludge substantially consisting of iron hydroxide is separated from the solution ccontaining copper and nickel, that copper oxide is precipitated from the solution containing copper and nickel and that the precipitated cop per oxide is separated from the nickel containing solution.

2. Method as set forth in claim 1, characterised in that the zinc hydroxide is dissolved from the oxidation residue at a pH value in the range of 12.

3. Method as set forth in claim 1 or 2, characterised in that the chromium hydroxide is with hydrogen peroxide at a pH value in the range of 8.

4. Method as set forth in any one of claims 1 to 3, characte rised in that copper and nickel are dissolved from the oxi dation residue or the alkali treatment residue, respectively, at a pH value in the range of 3.5.

5. Method as set forth in any one of claims 1 to 4, characte rised in that the copper oxide is precipitated from the solution containing copper and nickel at a pH value in the range of 8 by the addition of hydrogen peroxide.

6. Method as set forth in any one of the preceding claims, characterised in that the solutions containing chromate, zincate, copper and nickel are collected in respective receptacles and these solutions are circulated for dissol ving the metal in question from the hydroxide sludge.

7. Method as set forth in claim 6, characterised in that each solution is circulated with the interposition of a filter and until a predetermined enrichment cocentration is achieved.

8. Method as set forth in any one of claims 1 to 7, characte rised in that the hydroxide sludge is reacted in batch quantities in a reaction vessel using a single-vessel technique.

9. Method as set forth in claim 8, characterised in that the solution containing copper and nickel is returned to the reaction vessel after the residual sludge substantially containing iron hydroxide is removed.

10. Method as set forth in claim 9, characterised in that the precipitated copper oxide is dissolved by aqueous acid and the aqueous acid solution is passed from the reaction vessel to the receptacle for the copper containing solution.

11. Method as set forth in claim 9, characterised in that the residual sludge substantially consisting of iron hydroxide is further processed to iron oxide.

12. Method as set forth in claim 7, characterised in that, from the solutions containing copper, nickel and possibly zinc, the respective metals are electrolytically recovered after the predetermined enrichment concentration is attained.

13. Apparatus for carrying out the method as set forth in any one of the preceding claims, characterised by a reaction vessel (1) provided with a filling device (2) and connected to a recipient (10) through a filter (7), a reagent metering apparatus (4) connected to the reaction vessel (1), a circulation installation (11) having a circulation conduit (12) which comprises a circulation pump (13) and connects the recipient (10) to the reaction vessel (1), a removal device (8) which connects the filter (7) to a receptacle (9) for residual sludge substantially containing iron hydroxide, and respective receptacles (16,17,18,19) for zincate solution, chromate solution, nickel solution and copper solution, which receptacles are connectable on the input side to the recipient (10) through at least one controlled valve (15) and on the output side through controlled valves (20) selectively to either the circulation installation (11) or a further processing installation.

14. Apparatus as set forth in claim 13, characterised in that the reagent metering device (4) comprises a first reservoir (4A) for aqueous hydrogen peroxide solution, a second reservoir (4B) for aqueous alkaline solution, and a third reservoir (4C) for aqueous acid and that each reservoir (4A,4B,4C) is connected to the reaction vessel (1) through a controlled metering valve (5).

15. Apparatus as set forth in claim 13 or 14, characterised in that a programmable control device (25) is provided and that the reaction vessel (1) contains a pH sensor (26) connected to the programmable control device (25).

16. Apparatus as set forth in any one of claims 13 to 15, characterised in that the further processing installation for further processing the solutions containing copper, nickel and possibly zinc is an installation for electrolytical deposition of the respective metals.


**Revendications**

1. Procédé destiné au retraitement de boues d'hydroxyde comprenant essentiellement de l'hydroxyde, du chrome, du fer, du cuivre, du nickel et, le cas échéant, du zinc, caractérisé par le fait que dans le cas de présence de zinc, l'hydroxyde de zinc est dissolu de la boue par alcali, qu'ensuite, l'hydroxyde de chrome dans le résidu du traitement d'alcali est oxydé en chromate dans un milieu faiblement alcalique, que du cuivre et du nickel est dissolu du résidu de l'oxydation et du traitement d'alcali au moyen de traitement d'acide, que la boue restante constituée essentiellement d'hydroxyde de fer est séparée de la solution comprenant du cuivre et du nickel, que de l'oxyde de cuivre est précipité de la solution comprenant du cuivre et du nickel et que l'oxyde de cuivre précipité est séparé de la solution comprenant du nickel.

2. Procédé selon la revendication 1, caractérisé par le fait que l'hydroxyde de zinc est dissolu du résidu d'oxydation à une valeur pH dans le domaine de 12.

3. Procédé selon la revendication 1 ou 2 , caractérisé par le fait que l'hydroxyde de chrome est avec du peroxyde d'hydrogène à une valeur pH dans le domaine de 8.

4. Procédé selon l'une des revendications 1 à 3, caractérisé par le fait que du cuivre et du nickel sont dissolus du résidu d'oxydation ou du résidu du traitement d'alcali à une valeur pH dans le domaine de 3,5.

5. Procédé selon l'une des revendications 1 à 4 caractérisé par le fait que l'oxyde de cuivre est précipité de la solution comprenant du cuivre et du nickel à une valeur pH dans le domaine de 5 par l'addition de peroxyde d'hydrogène.

6. Procédé selon l'une des revendications ci-dessus, caractérisé par le fait que les solutions comprenant du chormate, du cincate, du cuivre et du nickel sont captées respectivement dans un récipient collecteur propre et ces solutions sont circulées afin de dissoudre le métal concerné de la boue d'hydroxyde.

7. Procédé selon la revendication 6, caractérisé par le fait que chaque solution est circulée en intercalant un filtre et jusqu'à l'arrivée à une concentration d'enrichissement prédéterminée.

8. Procédé selon l'une des revendications 1 à 7, caractérisée par le fait que la boue d'hydroxyde est transposée en charges dans un récipient de réaction selon le procédé à pot unique.

9. Procédé selon la revendication 8, caractérisé par le fait que la solution comprenant du cuivre et du nickel est retournée dans le récipient de réaction après extraction de la boue restante comrpenant essentiellement de l'hydroxyde de fer.

10. Procédé selon la revendication 9, caractérisé par le fait que l'oxyde de cuivre est dissolu par l'acide aqueux et la solution acide aqueuse est guidée du récipient de réaction dans le récipient collecteur pour la solution comprenant du cuivre.

11. Procédé selon la revendication 9, caractérisé par le fait que la boue restante comprenant essentiellement de l'hydroxyde de fer est traité en oxyde de fer.

12. Procédé selon la revendication 7, caractérisé par le fait que à partir des solutions comrenant du cuivre, du nickel et, le cas échéant, du zinc, les métaux respectifs sont regagnés electrolytiquement après avoir obtenu la concentration d'enrichissement prédéterminée.

13. Dispositif destiné à executer le procédé selon l'une des revendications ci-dessous, caractérisé par un récipient de réaction (1) muni d'un dispositif de remplissage (2) et raccordé par un filtre (7) à un récipient collecteur (10), un dispositif de dosage de réactif (4) relié au récipient de réaction (1), un dispositif de circulation (11) avec une conduite de circulaiton (12) comprenant une pompe de circulaiton (13) et reliant le récipient collecteur (10) au récipient de réaction (1), un dispositif de décharge (8) reliant le filtre (7) à un récipient collecteur (9) pour la boue restante comprenant essentiellement de l'hydroxyde de fer, et des récipients collecteurs (16,17,18,19) respectivement pour la solution de cincate, la solution de chromate, la solution de nickel et la solution de cuivre, qui sont chacun raccordable du côté entrée par au moins une soupape commandée (15) au récipient collecteur (10) et du côté sortie par des soupapes commandées (20) selectivement à l'installation de circulation (11) ou une installation de retraitement.

14. Dispositif selon la revendication 13, caractérisé par le fait que le dispositif de dosage de réactif (4) comprend un premier réservoir (4A) pour une solution de peroxyde d'hydrogène aqueuse, un second réservoir (48) pour un lessive alcaline et un troisième réservoir (4C) pour de l'acide aqueux, et que chaque réservoir (4A,4B,4C) est raccordé par une soupape de dosage (5) au récipient de réaction (1).

15. Dispositif selon la revendication 13 ou 14, caractérisé par le fait qu'un dispositif de commande programmable (25) est prévu et que le récipient de réaction (1) comprend un détecteur pH (26) relié au dispositif de commande (25) programmable.

16. Dispositif selon l'une des revendications 13 à 15, caractérisé par le fait que l'installation de retraitement destinée au retraitement des solutions comprenant du cuivre, du nickel et, le cas échéant, du zinc est une installation destinée à la deposition des métaux respectifs.